# EUROPÄISCHE PATENTSCHRIFT

(11) **EP 1 586 829 B1**
(45) Veröffentlichungstag und Bekanntmachung des Hinweises auf die Patenterteilung: **30.07.2008**
(21) Anmeldenummer: 04008841.1
(22) Anmeldetag: 14.04.2004
(51) Int. Cl.: F24J 3/08

(54) **Verfahren zur Nutzung von Erdwärme**
Method of utilizing geothermal heat
Méthode d'utilisation de l'énergie géothermique

(43) Veröffentlichungstag der Anmeldung: 19.10.2005
(73) Patentinhaber: ENRO GeothermieEntwicklung GmbH, 14974 Ludwigsfelde (DE)
(72) Erfinder: Bund, Karlheinz Dr.,, 45133 Essen (DE)
(74) Vertreter: Rohmann, Michael

(56) Entgegenhaltungen:
- CH-A- 589 263
- US-A- 4 074 754
- US-A- 4 223 729
- US-A- 4 491 367

## Beschreibung

Die Erfindung betrifft ein Verfahren zur Nutzung von Erdwärme, insbesondere zur Stromerzeugung. Mit anderen Worten betrifft die Erfindung ein Verfahren zur geothermischen Stromerzeugung.

Aus der Praxis ist es bekannt, zum Zwecke der Nutzung von Erdwärme zwei Bohrungen in das Erdreich bzw. in das Gestein einzubringen, siehe dazu beispielsweise die Patentschrift (H-589 263). Die erste Bohrung ist für eine Zuführungsleitung für ein Wärmeträgermedium vorgesehen, bei dem es sich in der Regel um Wasser handelt. Die zweite Bohrung steht für eine Förderleitung zum Zurückführen des durch die Erdwärme erwärmten Wassers an die Erdoberfläche zur Verfügung. Das durch die erste Bohrung zugeführte Wasser durchströmt in der Tiefe das Erdreich bzw. das Gestein und wird dabei durch die Erdwärme aufgeheizt. Die Abstände der beiden Bohrlöcher betragen in der Regel zwischen 1 und 2 km. Über das zweite Bohrloch bzw. über die Förderleitung wird das erwärmte Wasser normalerweise mit Hilfe einer Pumpe gefördert. Die Wärme des an die Erdoberfläche beförderten Wassers wird dann in der Regel mit Hilfe eines Wärmetauschers auf einen Kreislauf übertragen, in dem Dampf für die Stromgewinnung erzeugt wird. Das dabei abgekühlte Wasser wird anschließend über das erste Bohrloch wieder in das Erdreich bzw. in das Gestein verpresst. Dieses bekannte Verfahren ist mit dem Nachteil verbunden, dass die Wärmeausbeute bezüglich der im Erdreich auf das Wärmeträgermedium (Wasser) übertragenen Wärme zu wünschen übrig lässt. Mit anderen Worten ist der Wirkungsgrad im Hinblick auf die Wärmeübertragung nicht zufriedenstellend.

Dementsprechend liegt der Erfindung das technische Problem zugrunde, ein Verfahren der eingangs genannten Art anzugeben, mit dem auf einfache Weise Erdwärme effektiv und in hoher Ausbeute genutzt werden kann, insbesondere zur Stromerzeugung genutzt werden kann.

Zur Lösung dieses technischen Problems lehrt die Erfindung ein Verfahren zur Nutzung von Erdwärme, insbesondere zur Stromerzeugung,
wobei ein Wärmeträgermedium durch zumindest eine Zuführungsleitung in das Erdreich eingeführt wird,
wobei das Wärmeträgermedium über eine Mehrzahl von in zumindest einer linearen Reihe angeordneten Austrittsöffnungen in das Erdreich austritt,
wobei das Wärmeträgermedium von den Austrittsöffnungen über einen Strömungsabstand das Erdreich durchdringend zu in zumindest einer linearen Reihe angeordneten Abführungsöffnungen geführt wird, wobei das Wärmeträgermedium über den Strömungsabstand s mit im Wesentlichen konstanter Strömungsgeschwindigkeit von den Austrittsöffnungen (2) zu den Abführungsöffnungen (3) strömt,
und wobei das erwärmte Wärmeträgermedium über zumindest eine an die Abführungsöffnungen angeschlossene Förderleitung wieder zur Erdoberfläche zurückgeführt wird.

Erdreich meint im Rahmen der Erfindung vor allem Gestein und insbesondere kristallines Gestein, wie beispielsweise Granit oder Gneise. Mit Erdreich sind aber auch hochpermeable Gesteinsschichten, sogenannte Aquifere gemeint. Der Begriff Erdreich umfasst im Rahmen der Erfindung fernerhin auch sogenannte Störungszonen. Dabei handelt es sich um Bruchzonen oder Bruchflächen, die in Sedimentgestein wie kristallinem Gestein auftreten können. Die Austrittsöffnungen für das Wärmeträgermedium sind zweckmäßigerweise in einer Tiefe von 1500 m bis 7000 m, vorzugsweise 2000 m bis 7000 m und bevorzugt 3000 m bis 7000 m angeordnet. Nach einer besonders bevorzugten Ausführungsform der Erfindung sind die Austrittsöffnungen in einer Tiefe von 3500 m bis 6000 m vorgesehen.

Dass die Austrittsöffnungen bzw. die Abführungsöffnungen jeweils in einer linearen Reihe angeordnet sind, meint im Rahmen der Erfindung, dass die Austrittsöffnungen bzw. die Abführungsöffnungen auf einer Geraden bzw. im Wesentlichen auf einer Geraden angeordnet sind. Die Öffnungen müssen im Rahmen der Erfindung also nicht präzise bzw. nicht mathematisch präzise auf einer Geraden angeordnet sein, sondern können auch gleichsam wie Messwertstreuungen um eine Ausgleichsgerade platziert sein.

Zweckmäßigerweise wird ein flüssiges Wärmeträgermedium durch die Zuführungsleitung zugeführt. Nach besonders bevorzugter Ausführungsform der Erfindung wird Wasser als Wärmeträgermedium eingesetzt.

Eine sehr bevorzugte Ausführungsform der Erfindung ist dadurch gekennzeichnet, dass eine Mehrzahl von Austrittsöffnungen an einer einzigen Zuführungsleitung angeschlossen wird. Dabei können alle Austrittsöffnungen in einer linearen Reihe lediglich an eine einzige Zuführungsleitung angeschlossen sein. Es liegt im Rahmen der Erfindung, dass Austrittsöffnungen und Zuführungsleitung gleichsam rechenartig bzw. rechenbesenartig angeordnet sind. Dabei bildet die Zuführungsleitung den Rechenstiel und die einzelnen den Austrittsöffnungen zugeordneten Austrittsleitungen bilden die Zinken des Rechens bzw. des Rechenbesens. Vorzugsweise sind zumindest zwei Austrittsöffnungen einer linearen Reihe an eine einzige Zuführungsleitung angeschlossen.

Eine bevorzugte Ausführungsform der Erfindung ist dadurch gekennzeichnet, dass die Austrittsöffnungen in einer sich über eine Strecke von 500 m bis 1500 m, vorzugsweise von 750 m bis 1250 m erstreckenden linearen Reihe angeordnet werden. Besonders bevorzugt ist eine Länge von 800 m bis 1200 m, beispielsweise von 1000 m für eine lineare Reihe von Austrittsöffnungen. Die vorstehend für eine lineare Reihe von Austrittsöffnungen angegebenen Längen treffen vorzugsweise auch für die Länge einer linearen Reihe von Abführungsöffnungen zu. Es liegt im Rahmen der Erfindung, dass die Austrittsöffnungen und/oder die Abführungsöffnungen in einer linearen Reihe gleichmäßig verteilt sind und insbesondere gleiche Abstände bzw. im Wesentlichen gleiche Abstände voneinander aufweisen.

Nach bevorzugter Ausführungsform der Erfindung wird eine lineare Reihe von Austrittsöffnungen und eine lineare Reihe von Abführungsöffnungen mit einem Strömungsabstand von 200 m bis 800 m, vorzugsweise von 300 m bis 700 m voneinander angeordnet. Zweckmäßigerweise beträgt der Strömungsabstand zwischen den linearen Reihen 350 m bis 650 m, beispielsweise 500 m.

Es liegt im Rahmen der Erfindung, dass das Erdreich zwischen einer linearen Reihe von Austrittsöffnungen und einer linearen Reihe von Abführungsöffnungen zur Erzeugung von Strömungskanälen für das Wärmeträgermedium künstlich aufgebrochen wird. Durch dieses künstliche Aufbrechen werden neue Hohlräume (Risse, Rissflächen, Klüfte, Poren und dergleichen) im Erdreich geschaffen bzw. bestehende Hohlräume erweitert, so dass Strömungskanäle zur Verfügung stehen, durch die das Wärmeträgermedium von den Austrittsöffnungen zu den Abführungsöffnungen strömen kann. Ein solches künstliches Aufbrechen findet insbesondere statt, wenn es sich bei dem Erdreich um Gestein bzw. Kristallingestein handelt. Das künstliche Aufbrechen dieses Gesteins ist auch unter der Bezeichnung "Hot-Dry-Rock-Verfahren" (HDR-Verfahren) bekannt. Vorzugsweise wird im Rahmen der Erfindung zum künstlichen Aufbrechen des Erdreichs bzw. des Gesteins das an sich bekannte sogenannte "Hydraulic-Fracturing-Verfahren" angewendet. Dabei wird eine Flüssigkeit, vorzugsweise Wasser unter hohem Druck in das Erdreich bzw. in das Gestein verpresst. Durch diesen hohen Druck und die im Gestein herrschenden Spannungen können dann Risse bzw. Rissflächen erzeugt werden oder bestehende Risse bzw. Rissflächen aufgeweitet werden. Es liegt im Rahmen der Erfindung, dass durch das künstliche Aufbrechen des Erdreiches bzw. des Gesteins die hydraulische Durchlässigkeit des Erdreichs erhöht wird. Dadurch kann die Fließrate des Wärmeträgermediums über den Strömungsabstand zwischen den Austrittsöffnungen und den Abführungsöffnungen gesteigert werden. - Das erfindungsgemäße Verfahren wird vorzugsweise mit der Maßgabe durchgeführt, dass über den Strömungsabstand zwischen Austrittsöffnungen und Abführungsöffnungen eine Mindestfließrate von 50 m³/h verwirklicht werden kann.

Es liegt im Rahmen der Erfindung, dass eine Mehrzahl von Abführungsöffnungen an eine einzige Förderleitung angeschlossen wird. Vorzugsweise wird eine rechenartige bzw. rechenbesenartige Anordnung von Förderleitung und von den Abführungsöffnungen zugeordneten Abführungsleitungen realisiert. Die Förderleitung bildet dabei gleichsam den Rechenstiel und die Abführungsleitungen mit ihren Abführungsöffnungen bilden die Zinken des Rechens bzw. Rechenbesens. Es liegt im Rahmen der Erfindung, dass zumindest zwei Abführungsleitungen mit ihren Abführungsöffnungen an eine einzige Förderleitung angeschlossen sind.

Eine sehr bevorzugte Ausführungsform des erfindungsgemäßen Verfahrens ist dadurch gekennzeichnet, dass die Austrittsöffnungen und die Abführungsöffnungen mit der Maßgabe angeordnet werden, dass jeder Austrittsöffnung zumindest eine Abführungsöffnung und/oder jeder Abführungsöffnung zumindest eine Austrittsöffnung zugeordnet ist. Vorzugsweise ist jeder Austrittsöffnung einer linearen Reihe von Austrittsöffnungen eine einzige Abführungsöffnung in der benachbarten linearen Reihe von Abführungsöffnungen zugeordnet und umgekehrt. Grundsätzlich liegt es aber auch im Rahmen der Erfindung, dass einer Austrittsöffnung in einer linearen Reihe von Austrittsöffnungen ein bis fünf Abführungsöffnungen in einer benachbarten linearen Reihe von Abführungsöffnungen zugeordnet sind und umgekehrt.

Nach einer ganz besonders bevorzugten Ausführungsform der Erfindung ist zumindest ein Teil der Abführungsöffnungen, vorzugsweise alle Abführungsöffnungen einer linearen Reihe von Abführungsöffnungen tiefer bzw. auf tieferem Niveau angeordnet als die Austrittsöffnungen einer benachbarten linearen Reihe von Austrittsöffnungen. Auf diese Weise kann eine besonders vorteilhafte Strömung mit sehr effektivem Wärmeaustausch verwirklicht werden. Im Rahmen dieser Ausführungsform liegen die Abführungsöffnungen bei einem Strömungsabstand von 200 m bis 800 m, vorzugsweise mindestens 20 m tiefer, bevorzugt mindestens 50 m tiefer als die Austrittsöffnungen.

Zweckmäßigerweise ist zumindest eine lineare Reihe von Austrittsöffnungen parallel oder im Wesentlichen parallel zu zumindest einer linearen Reihe von Abführungsöffnungen angeordnet. Im Wesentlichen parallel meint dabei vorzugsweise, dass zwischen einer linearen Reihe von Austrittsöffnungen und einer linearen Reihe von Abführungsöffnungen höchstens ein Winkel von 30°, vorzugsweise höchstens ein Winkel von 20° und sehr bevorzugt höchstens ein Winkel von 15° gebildet wird.

Eine sehr bevorzugte Ausführungsform des erfindungsgemäßen Verfahrens ist dadurch gekennzeichnet, dass eine mittige lineare Reihe von Abführungsöffnungen vorgesehen ist und dass rechts und links von dieser mittigen linearen Reihe jeweils eine lineare Reihe von Austrittsöffnungen vorgesehen ist. Dabei sind die drei linearen Reihen zweckmäßigerweise parallel oder im Wesentlichen parallel zueinander angeordnet. Außerdem hat die linke lineare Reihe von Austrittsöffnungen den gleichen Strömungsabstand wie die rechte lineare Reihe von Austrittsöffnungen zu der mittigen linearen Reihe von Abführungsöffnungen.

Es liegt im Rahmen der Erfindung, dass die Anzahl und die Anordnung der Austrittsöffnungen und der Abführungsöffnungen mit der Maßgabe ausgewählt wird, dass das Wärmeträgermedium über den Strömungsabstand s mit konstanter Geschwindigkeit oder mit im Wesentlichen konstanter Geschwindigkeit von den Austrittsöffnungen zu den Abführungsöffnungen strömt. Zweckmäßigerweise wird der durch die Austrittsöffnungen zugeführte Volumenstrom und der durch die Abführungsöffnungen abgeförderte Volumenstrom mit der Maßgabe eingestellt, dass das Wärmeträgermedium über den Strömungsabstand s mit konstanter Geschwindigkeit oder im Wesentlichen konstanter Geschwindigkeit strömt. Vorzugsweise werden auch die durch das künstliche Aufbrechen von Erdreich erzeugten Strömungskanäle so eingerichtet, dass Wärmeträgermedium über den Strömungsabstand s mit der konstanten Geschwindigkeit oder mit im Wesentlichen konstanter Geschwindigkeit strömt. Überraschenderweise kann im Rahmen des erfindungsgemäßen Verfahrens eine konstante Strömungsgeschwindigkeit sehr einfach und problemlos eingerichtet werden. Das hat besondere Vorteile.

Vorzugsweise wird das Wärmeträgermedium mit zumindest einer Fördereinrichtung in die Zuführungsleitung eingepresst bzw. eingedrückt und/oder wird das Wärmeträgermedium mit zumindest einer Fördereinrichtung über die Förderleitung wieder an die Erdoberfläche befördert. Bei einer Fördereinrichtung handelt es sich zweckmäßigerweise um eine geeignete Pumpe.

Das aufgewärmte bzw. aufgeheizte Wärmeträgermedium wird an der Erdoberfläche nach sehr bevorzugter Ausführungsform der Erfindung zur Stromerzeugung bzw. zur Gewinnung von elektrischer Energie verwendet. Dabei wird die von dem Wärmeträgermedium beförderte Wärmeenergie in mechanische Energie umgewandelt. Dazu wird zweckmäßigerweise Dampf bei hoher Temperatur und hohem Druck über zumindest eine Turbine geleitet. Dabei wird der Dampf abgekühlt und entspannt. Die Turbine treibt einen Generator an, mit dem die mechanische Energie in elektrische Energie umgewandelt wird. Nach einer Ausführungsform der Erfindung wird für das Medium, das dampfförmig eine Turbine antreiben soll, ein Medium eingesetzt, das einen geringeren Siedepunkt als Wasser hat. Vorzugsweise handelt es sich bei diesem Medium um eine organische Flüssigkeit mit niedrigerem Siedepunkt als Wasser, beispielsweise um einen Kohlenwasserstoff wie n-Pentan oder Isobutan. Zweckmäßigerweise wird in einem Wärmetauscher die Wärmeenergie von dem Wärmeträgermedium auf das die Turbine antreibende Medium übertragen. Vorzugsweise zirkuliert die organische Flüssigkeit in einem geschlossenen Kreislauf. Das bei der Wärmeübertragung abgekühlte Wärmeträgermedium wird anschließend bevorzugt wieder in die Zuführungsleitung eingeleitet bzw. eingepresst. Nach besonders bevorzugter Ausführungsform der Erfindung wird also das Wärmeträgermedium, vorzugsweise Wasser, in einem geschlossenen Kreislauf geführt.

Der Erfindung liegt die Erkenntnis zugrunde, dass mit dem erfindungsgemäßen Verfahren ein sehr effektiver Wärmeaustausch bzw. eine sehr effektive Übertragung von Erdwärme auf das Wärmeträgermedium möglich ist. Mit anderen Worten ist die Wärmeausbeute bezüglich der im Erdreich auf das Wärmeträgermedium übertragenen Wärme überraschend hoch. Die hohe Wärmeausbeute kann insbesondere deshalb erreicht werden, weil das Wärmeträgermedium über den Strömungsabstand s, das heißt von den Austrittsöffnungen zu den Abführungsöffnungen mit konstanter Geschwindigkeit oder im Wesentlichen konstanter Geschwindigkeit strömen kann. Außerdem ist das erfindungsgemäße Verfahren im Vergleich zu aus dem Stand der Technik bekannten Verfahren relativ einfach und ohne großen Mehraufwand durchführbar. Von besonderem Vorteil ist fernerhin, dass im Rahmen des erfindungsgemäßen Verfahrens ein hoher Wirkungsgrad bei der Gewinnung von elektrischer Energie aus Erdwärme erreichbar ist. Hervorzuheben ist außerdem, dass die erfindungsgemäße Energiegewinnung bzw. Energieumwandlung ausgesprochen umweltfreundlich ist. Vor allem Kohlendioxidemissionen fallen bei der Nutzung von Erdwärme nicht an und somit wird bei der Anwendung des erfindungsgemäßen Verfahrens ein wesentlicher Beitrag zum Klimaschutz geleistet.

Nachfolgend wird die Erfindung anhand einer lediglich ein Ausführungsbeispiel darstellenden Zeichnung näher erläutert. Es zeigen in schematischer Darstellung:
- **Fig. 1**: einen Schnitt durch eine erfindungsgemäße Vorrichtung zur Durchführung des erfindungsgemäßen Verfahrens und
- **Fig. 2**: schematisch die Verteilung von Austrittsöffnungen und Abführungsöffnungen.

Die Figuren zeigen eine Vorrichtung zur Durchführung des erfindungsgemäßen Verfahrens zur Nutzung von Erdwärme, insbesondere zur Stromerzeugung. Ein nicht näher dargestelltes Wärmeträgermedium wird durch eine Zuführungsleitung 1 in das Erdreich eingeführt. Bei dem Wärmeträgermedium handelt es sich vorzugsweise um Wasser. Im Ausführungsbeispiel nach den Figuren sind im Übrigen zwei Zuführungsleitungen 1 vorgesehen. In einer Tiefe t, die im Ausführungsbeispiel 3500 m betragen mag, tritt dann das über eine Zuführungsleitung 1 zugeführte Wärmeträgermedium über eine Mehrzahl von in jeweils einer linearen Reihe angeordneten Austrittsöffnungen 2 in das Erdreich aus. Vorzugsweise und im Ausführungsbeispiel sind die in einer linearen Reihe angeordneten Austrittsöffnungen 2 an lediglich eine einzige Zuführungsleitung 1 angeschlossen. Zweckmäßigerweise ist eine nicht näher dargestellte rechenartige Anordnung von Zuführungsleitung 1 und Austrittsöffnungen 2 bzw. den Austrittsöffnungen 2 zugeordneten nicht dargestellten Austrittsleitungen vorgesehen. Dabei bildet die Zuführungsleitung 1 gleichsam den Rechenstiel und die Austrittsöffnungen 2 bzw. die nicht dargestellten den Austrittsöffnungen 2 zugeordneten Austrittsleitungen bilden die Zinken des Rechens.

Das Wärmeträgermedium strömt von den Austrittsöffnungen 2 über einen Strömungsabstand s durch das Erdreich und wird dort durch die Erdwärme gleichsam erwärmt bzw. aufgeheizt. Das Wärmeträgermedium strömt dann zu den ebenfalls in einer linearen Reihe angeordneten Abführungsöffnungen 3. Zweckmäßigerweise sind die in der linearen Reihe angeordneten Abführungsöffnungen 3 an lediglich eine einzige Förderleitung 4 angeschlossen. Durch die Förderleitung 4 wird das erwärmte Wärmeträgermedium wieder an die Erdoberfläche 5 zurückbefördert. Vorzugsweise ist ebenfalls eine rechenartige Anordnung von Förderleitung 4 und Abführungsöffnungen 3 bzw. den Abführungsöffnungen 3 zugeordneten nicht dargestellten Abführungsleitungen verwirklicht.

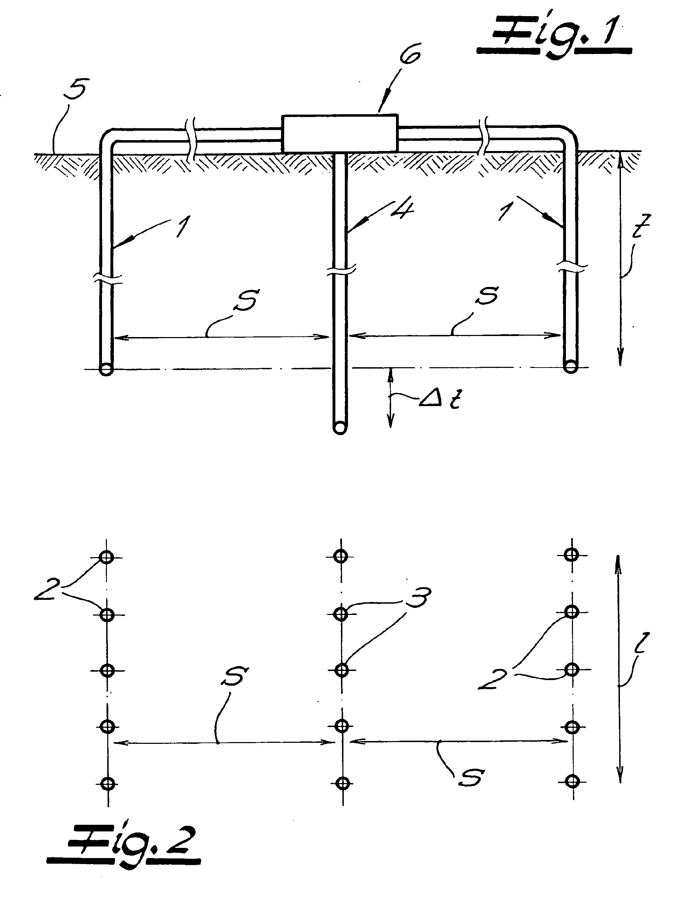

In der Fig. 1 ist erkennbar, dass nach sehr bevorzugter Ausführungsform die Abführungsöffnungen 3 tiefer liegen bzw. auf einem tieferen Niveau angeordnet sind, als die Austrittsöffnungen 2. Die Differenz Δt, um welche diese Abführungsöffnungen 3 tiefer liegen, beträgt bei einem Strömungsabstand s von 500 m mindestens 50 m.

In der Fig. 2 ist erkennbar, dass vorzugsweise und im Ausführungsbeispiel eine mittige lineare Reihe von Abführungsöffnungen 3 vorgesehen ist und dass rechts und links von dieser mittigen linearen Reihe jeweils eine lineare Reihe von Austrittsöffnungen 2 angeordnet ist. Bevorzugt sind alle drei linearen Reihen parallel oder im Wesentlichen parallel zueinander angeordnet.

Die Länge I der Reihen von Austrittsöffnungen 2 bzw. Abführungsöffnungen 3 beträgt vorzugsweise und im Ausführungsbeispiel 1000 m. Der Fig. 2 ist auch entnehmbar, dass die Austrittsöffnungen 2 bzw. Abführungsöffnungen 3 in den linearen Reihen gleichmäßig verteilt sind und gleiche Abstände zueinander aufweisen. Nach ganz besonders bevorzugter Ausführungsform und im Ausführungsbeispiel (Fig. 2) ist eine Austrittsöffnung 2 einer linearen Reihe jeweils eine Abführungsöffnung 3 zugeordnet. Das erwärmte Trägermedium wird vorzugsweise mit Hilfe von zumindest einer Pumpe durch die Förderleitung 4 an die Erdoberfläche 5 bzw. zu einer Stromerzeugungseinrichtung 6 befördert. In dieser Stromerzeugungseinrichtung 6 wird in nicht näher dargestellter Weise die von dem Wärmeträgermedium beförderte Wärme (Erdwärme) in mechanische Energie umgewandelt. Dazu wird die Wärme in einem Wärmetauscher zweckmäßigerweise an eine organische Flüssigkeit übertragen, die einen niedrigeren Siedepunkt besitzt als Wasser. Dadurch wird die organische Flüssigkeit verdampft und der Dampf wird bei hoher Temperatur und hohem Druck über zumindest eine Turbine geleitet. Die Turbine treibt einen Generator an, mit dem die mechanische in elektrische Energie umgewandelt wird. Das organische Medium wird bei diesem Vorgang abgekühlt und entspannt und anschließend zweckmäßigerweise wieder dem Wärmetauscher zugeführt, in der es mit Hilfe des Wärmeträgermediums erwärmt wird. Das nach dem Wärmetauscher abgekühlte Wärmeträgermedium wird anschließend wieder in Zuführungsleitungen 1 zurückgeführt, was in der Fig. 1 durch entsprechende Pfeile veranschaulicht wurde. Das Wärmeträgermedium wird somit in einem geschlossenen Kreislauf geführt.

## Patentansprüche

1. Verfahren zur Nutzung von Erdwärme, insbesondere zur Stromerzeugung,
wobei ein Wärmeträgermedium durch zumindest eine Zuführungsleitung (1) in das Erdreich eingeführt wird,
wobei das Wärmeträgermedium über eine Mehrzahl von in zumindest einer linearen Reihe angeordneten Austrittsöffnungen (2) in das Erdreich austritt,
wobei das Wärmeträgermedium von den Austrittsöffnungen (2) über einen Strömungsabstand s das Erdreich durchdringend zu in zumindest einer linearen Reihe angeordneten Abführungsöffnungen (3) geführt wird,
wobei das Wärmeträgermedium über den Strömungsabstand s mit im Wesentlichen konstanter Strömungsgeschwindigkeit von den Austrittsöffnungen zu den Abführungsöffnungen strömt,
und wobei das erwärmte Wärmeträgermedium über zumindest eine an die Abführungsöffnungen (3) angeschlossene Förderleitung (4) wieder zur Erdoberfläche (5) zurückgeführt wird.

2. Verfahren nach Anspruch 1, wobei als Wärmeträgermedium Wasser eingesetzt wird.

3. Verfahren nach einem der Ansprüche 1 oder 2, wobei eine Mehrzahl von Austrittsöffnungen (2) an eine Zuführungsleitung (1) angeschlossen wird.

4. Verfahren nach einem der Ansprüche 1 bis 3, wobei die Austrittsöffnungen (2) in einer sich über eine Strecke von 500 m bis 1500 m, vorzugsweise von 750 m bis 1250 m erstreckenden linearen Reihe angeordnet werden.

5. Verfahren nach einem der Ansprüche 1 bis 4, wobei eine lineare Reihe von Austrittsöffnungen (2) und eine lineare Reihe von Abführungsöffnungen (3) mit einem Strömungsabstand s von 200 m bis 800 m, vorzugsweise von 300 m bis 700 m voneinander angeordnet werden.

6. Verfahren nach einem der Ansprüche 1 bis 5, wobei das Erdreich zwischen einer Reihe von Austrittsöffnungen (2) und einer Reihe von Abführungsöffnungen (3) zur Erzeugung von Strömungskanälen für das Wärmeträgermedium künstlich aufgebrochen wird.

7. Verfahren nach einem der Ansprüche 1 bis 6, wobei eine Mehrzahl von Abführungsöffnungen (3) an eine Förderleitung (4) angeschlossen wird.

8. Verfahren nach einem der Ansprüche 1 bis 7, wobei die Austrittsöffnungen (2) und die Abführungsöffnungen (3) mit der Maßgabe angeordnet werden, dass jeder Austrittsöffnung (2) zumindest eine Abführungsöffnung (3) und/oder jeder Abführungsöffnung (3) zumindest eine Austrittsöffnung (2) zugeordnet ist.

9. Verfahren nach einem der Ansprüche 1 bis 8, wobei zumindest ein Teil der Abführungsöffnungen (3) auf tieferem Niveau angeordnet wird als die Austrittsöffnungen (2).

10. Verfahren nach einem der Ansprüche 1 bis 9, wobei zumindest eine lineare Reihe von Austrittsöffnungen (2) parallel oder im Wesentlichen parallel zu zumindest einer linearen Reihe von Abführungsöffnungen (3) angeordnet wird.

11. Verfahren nach einem der Ansprüche 1 bis 10, wobei eine mittige lineare Reihe von Abführungsöffnungen (3) vorgesehen wird und wobei rechts und links von dieser mittigen linearen Reihe jeweils eine lineare Reihe von Austrittsöffnungen (2) vorgesehen wird.

## Claims

1. Method for exploiting geothermal energy, in particular for generating electricity,
wherein a heat transfer medium is introduced into the ground using at least one supply pipe (1),
wherein the heat transfer medium is discharged into the ground via a plurality of discharge openings (2) arranged in at least one linear series,
wherein the heat transfer medium is transported from the discharge openings (2) over a flow distance s penetrating the ground to removal openings (3) arranged in at least one linear series,
wherein the heat transfer medium flows over the flow distance s from the discharge openings to the removal openings with essentially constant flow velocity,
and wherein the heated heat transfer medium is transported back again to the ground surface (5) via at least one feed pipe (4) connected to the removal openings (3).

2. Method according to Claim 1, wherein water is used as the heat transfer medium.

3. Method according to one of Claims 1 or 2, wherein a plurality of discharge openings (2) are connected to a supply pipe (1).

4. Method according to one of Claims 1 to 3, wherein the discharge openings (2) are arranged in a linear series extending over a distance of 500 m to 1500 m, preferably of 750 m to 1250 m.

5. Method according to one of Claims 1 to 4, wherein a linear series of discharge openings (2) and a linear series of removal openings (3) are separated from one another by a flow distance s of 200 m to 800 m, preferably of 300 m to 700 m.

6. Method according to one of Claims 1 to 5, wherein the ground between a series of discharge openings (2) and a series of removal openings (3) is broken open by artificial means to generate flow channels for the heat transfer medium.

7. Method according to one of Claims 1 to 6, wherein a plurality of removal openings (3) are connected to a feed pipe (4).

8. Method according to one of Claims 1 to 7, wherein the discharge openings (2) and the removal openings (3) are arranged subject to the condition that at least one removal opening (3) is assigned to each discharge opening (2), and/or at least one discharge opening (2) is assigned to each removal opening (3).

9. Method according to one of Claims 1 to 8, wherein at least one part of the removal openings (3) is arranged at a deeper level than the discharge openings (2).

10. Method according to one of Claims 1 to 9, wherein at least one linear series of discharge openings (2) is arranged parallel to or essentially parallel to at least one linear series of removal openings (3).

11. Method according to one of Claims 1 to 10, wherein a central linear series of removal openings (3) is provided, and wherein a linear sequence of discharge openings (2) is provided on the right and the left of said central linear series respectively.

## Revendications

1. Procédé pour l'utilisation de la chaleur thermique, en particulier pour la production de courant,
dans lequel un fluide caloporteur est introduit dans le sol par au moins une conduite d'alimentation (1),
dans lequel un fluide caloporteur s'écoule dans le sol par une pluralité d'orifices d'écoulement (2) disposés en au moins une rangée linéaire,
dans lequel le fluide caloporteur est guidé à partir des orifices d'écoulement (2) vers des orifices d'évacuation (3) disposés en au moins une rangée linéaire, en traversant le sol sur une distance d'écoulement s,
dans lequel le fluide caloporteur s'écoule sur la distance d'écoulement s avec une vitesse d'écoulement essentiellement constante, à partir des orifices d'écoulement jusqu'aux orifices d'évacuation,
et dans lequel le fluide caloporteur chauffé est reconduit à la surface du sol (5) par au moins une conduite de transport (4) raccordée aux orifices d'évacuation (3).

2. Procédé selon la revendication 1, dans lequel de l'eau est utilisée en tant que fluide caloporteur.

3. Procédé selon l'une des revendications 1 ou 2, dans lequel une pluralité d'orifices d'écoulement (2) est raccordée à une conduite d'alimentation (1).

4. Procédé selon l'une des revendications 1 à 3, dans lequel les orifices d'écoulement (2) sont disposés en une rangée linéaire s'étendant sur un trajet de 500 à 1500 mètres, de préférence de 750 à 1250 mètres.

5. Procédé selon l'une des revendications 1 à 4, dans lequel une rangée linéaire d'orifices d'écoulement (2) et une rangée linéaire d'orifices d'évacuation (3) sont disposées en respectant entre elles une distance d'écoulement de 200 à 800 mètres, de préférence de 300 à 700 mètres.

6. Procédé selon l'une des revendications 1 à 5, dans lequel le sol entre une rangée d'orifices d'écoulement (2) et une rangée d'orifices d'évacuation (3) est ouvert artificiellement en vue de réaliser des canaux d'écoulement destinés au fluide caloporteur.

7. Procédé selon l'une des revendications 1 à 6, dans lequel une pluralité d'orifices d'évacuation (3) est raccordée à une conduite de transport (4).

8. Procédé selon l'une des revendications 1 à 7, dans lequel les orifices d'écoulement (2) et les orifices d'évacuation (3) sont disposés en respectant le principe d'après lequel au moins un orifice d'évacuation (3) est attribué à chacun des orifices d'écoulement(2), et/ou au moins un orifice d'écoulement (2) est attribué à chacun des orifices d'évacuation (3).

9. Procédé selon l'une des revendications 1 à 8, dans lequel au moins une partie des orifices d'évacuation (3) est disposée à une profondeur plus importante que les orifices d'écoulement (2).

10. Procédé selon l'une des revendications 1 à 9, dans lequel au moins une rangée linéaire d'orifices d'écoulement (2) est disposée de façon parallèle ou essentiellement parallèle à au moins une rangée linéaire d'orifices d'évacuation (3).

11. Procédé selon l'une des revendications 1 à 10, dans lequel est prévue une rangée linéaire médiane d'orifices d'évacuation (3), et dans lequel une rangée linéaire d'orifices d'écoulement (2) est prévue respectivement à gauche et à droite de cette rangée linéaire médiane.
